# EUROPÄISCHE PATENTSCHRIFT

(11) **EP 3 158 370 B1**
(45) Veröffentlichungstag und Bekanntmachung des Hinweises auf die Patenterteilung: **07.11.2018**
(21) Anmeldenummer: 15729149.3
(22) Anmeldetag: 12.06.2015
(51) Int. Cl.: G02B 5/08, G02B 1/14, G02B 27/14

(54) **OPTISCHES ELEMENT MIT EINER REFLEKTIERENDEN BESCHICHTUNG**
OPTICAL ELEMENT COMPRISING A REFLECTIVE COATING
ÉLÉMENT OPTIQUE MUNI D'UN REVÊTEMENT RÉFLÉCHISSANT

(30) Priorität: 20.06.2014 DE 102014108679
(43) Veröffentlichungstag der Anmeldung: 26.04.2017
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: SCHÜRMANN, Mark, 07743 Jena (DE); SCHWINDE, Stefan, 07743 Jena (DE); KAISER, Norbert, 07745 Jena (DE)
(74) Vertreter: Epping - Hermann - Fischer
(86) Internationale Anmeldenummer: PCT/EP2015/063208
(87) Internationale Veröffentlichungsnummer: WO 2015/193195

(56) Entgegenhaltungen:
- EP-A1- 2 573 597
- WO-A1-2006/053705
- DE-A1- 4 236 637
- DE-A1- 10 005 121
- DE-A1-102009 030 810
- GB-A- 2 281 411

## Beschreibung

Die Erfindung betrifft ein optisches Element, insbesondere ein gekrümmtes optisches Element, auf das eine reflektierende Beschichtung aufgebracht ist.

Zahlreiche Anwendungen präzisionsoptischer Komponenten erfordern eine Spiegelschicht, die in einem möglichst breiten Spektralbereich hochreflektierend ist. Als reflektierende Beschichtung werden daher oftmals Metalle wie zum Beispiel Gold, Aluminium oder Silber genutzt. Von den Metallen weist Silber vom sichtbaren bis in den infraroten Spektralbereich die höchste Reflektivität auf. Silber ist hingegen sehr anfällig gegen Korrosion. Um die Korrosion einer reflektierenden Metallschicht, insbesondere einer Silberschicht, zu vermeiden, kann eine Schutzschicht auf die Metallschicht aufgebracht werden.

Es hat sich aber herausgestellt, dass selbst mit einer Schutzschicht versehene reflektierende Silberschichten oftmals keine ausreichende Langzeitstabilität aufweisen. Werden zum Beispiel mit einer Schutzschicht versehene Silberspiegel längere Zeit Umweltbedingungen mit sehr hoher Luftfeuchtigkeit ausgesetzt oder kommt es gar zu Betauung solcher Spiegel, kann an diesen Stellen Flüssigkeit, insbesondere mit gelösten korrodierenden Substanzen, durch die Schutzschicht an die korrosionsempfindliche Silberschicht gelangen. An diesen Stellen wird ein Korrosionsprozess in Gang gesetzt, der sich dann ausgehend von diesem Ursprung durch die Silberschicht ausbreitet.

Der Erfindung liegt die Aufgabe zugrunde, ein verbessertes optisches Element mit einer reflektierenden Beschichtung anzugeben, das sich durch eine verbesserte Beständigkeit gegen Verunreinigungssubstanzen aus der Umgebung auszeichnet.

Diese Aufgabe wird durch ein optisches Element gemäß dem unabhängigen Anspruch 1 gelöst. Vorteilhafte Ausgestaltungen und Weiterbildungen der Erfindung sind Gegenstand der abhängigen Ansprüche.

Gemäß zumindest einer Ausgestaltung weist das optische Element eine reflektierende Beschichtung auf, die zum Beispiel auf die Oberfläche eines Substrats oder auf die Oberfläche einer auf ein Substrat aufgebrachten, vorzugsweise polierten Schicht, aufgebracht ist.

Das optische Element weist gemäß einer bevorzugten Ausgestaltung eine gekrümmte Oberfläche auf, wobei die reflektierende Beschichtung auf der gekrümmten Oberfläche angeordnet ist. Die gekrümmte Oberfläche kann zum Beispiel die Oberfläche eines Substrats oder die Oberfläche einer vorzugsweise polierten Schicht, die auf ein Substrat aufgebracht ist, sein. Das optische Element kann zum Beispiel für Anwendungen in der Präzisionsoptik vorgesehen sein. Das optische Element kann insbesondere für Anwendungen in der Astronomie und/oder für Anwendungen im Weltraum, zum Beispiel zur Erdbeobachtung, vorgesehen sein.

Die reflektierende Beschichtung enthält eine Haftschicht, die zum Beispiel als erste Schicht auf ein Substrat aufgebracht ist. Die Haftschicht kann bei der Herstellung der reflektierenden Beschichtung zum Beispiel in einem ersten Schritt durch ein PVD (Physical Vapour Deposition)-Verfahren wie beispielsweise thermischer Verdampfung, Elektronenstrahlverdampfung, plasmagestützter Verdampfung, Magnetronsputtern oder Ionenstrahlsputtern, auf die Oberfläche des optischen Elements aufgebracht werden. Alternativ kann zum Aufbringen der Haftschicht ein CVD (Chemical Vapour Deposition)-Verfahren oder ein ALD (Atomic Layer Deposition)-Verfahren eingesetzt werden. Die Haftschicht hat insbesondere die Funktion, die Haftung einer darüber angeordneten reflektierenden Metallschicht zu verbessern. Weiterhin kann die Haftschicht gleichzeitig die Funktion einer Diffusionsbarriereschicht aufweisen. In ihrer Eigenschaft als Diffusionsbarriereschicht kann die Haftschicht insbesondere die Diffusion zwischen Bestandteilen eines Substrats des optischen Elements und einer der Haftschicht nachfolgenden Metallschicht und umgekehrt vermindern.

Die Haftschicht kann eine Einzelschicht oder eine Folge von mehreren Schichten sein. Die Haftschicht ist vorteilhaft aus einem Material gebildet, das eine gute Adhäsion zwischen der ihr nachfolgenden Metallschicht und dem Substrat gewährleistet. Geeignete Materialien für die Haftschicht sind beispielsweise Metalle wie Cr, Ti, Cu, Ru, Mo, W, Halbleiter wie Si oder SiC, oder dielektrische Schichten wie SiO2, Si3N4, Al2O3, AlN, ZrO2, ZrN, HfO2, HfN, Ta2O5, TaN, Nb2O5, NbN, Y2O3, YN, oder Mischungen dieser Materialien. Die Haftschicht weist vorzugsweise eine Dicke zwischen 5 nm und 1000 nm, besonders bevorzugt zwischen 10 nm und 100 nm, auf. Der Haftschicht folgt in der reflektierenden Beschichtung eine zumindest teilweise reflektierende Metallschicht nach. Die zumindest teilweise reflektierende Metallschicht kann in Abhängigkeit von ihrer Schichtdicke eine hochreflektierende Metallschicht zur Ausbildung eines Reflektors oder alternativ eine nur teilweise reflektierende Metallschicht, zum Beispiel zur Ausbildung eines Strahlteilers, sein. Die Metallschicht der reflektierenden Beschichtung weist Silber auf. Besonders bevorzugt ist Silber, da Silber eine besonders hohe Reflexion aufweist. Silber ist zwar an sich anfällig gegenüber Korrosion, wobei der Korrosion bei dem hierin beschriebenen optischen Element aber durch das Schutzschichtsystem besonders effektiv entgegengewirkt wird.

In der reflektierenden Beschichtung folgt der Metallschicht ein Schutzschichtsystem nach, welches insbesondere zum Schutz der Metallschicht vor Umgebungseinflüssen dient. Das Schutzschichtsystem enthält mehrere dielektrische Schichten, wobei die dielektrischen Schichten mindestens eine erste Schicht und mindestens eine zweite Schicht umfassen, wobei die erste Schicht und die zweite Schicht eine unterschiedliche Beständigkeit gegenüber mindestens zwei verschiedenen Verunreinigungssubstanzen aufweisen. Beispielweise kann sich die mindestens eine erste Schicht durch eine hohe Beständigkeit gegenüber einer ersten Verunreinigungssubstanz und die mindestens eine zweite Schicht durch eine hohe Beständigkeit gegenüber einer von der ersten Verunreinigungssubstanz verschiedenen zweiten Verunreinigungssubstanz auszeichnen.

Die Verunreinigungssubstanzen können insbesondere solche Substanzen sein, die unter den Umgebungsbedingungen des optischen Elements, beispielsweise bei der Lagerung, dem Transport und/oder dem Betrieb, auftreten können. Bei einem zur Anwendung im Weltraum vorgesehenen optischen Element können dies die terrestrischen Umgebungsbedingungen sein, die beispielsweise bei der Herstellung, der Lagerung oder dem Transport des optischen Elements auftreten können. Die Verunreinigungssubstanzen können beispielsweise Flüssigkeiten sein, mit denen das optische Element in Kontakt kommen kann, wobei in den Flüssigkeiten beispielsweise Salze aus der Umgebung gelöst sein können. Die Verunreinigungssubstanzen können insbesondere hygroskopische Partikel sein, die Salze enthalten. Diese hygroskopischen Partikel können schon bei Raumtemperatur und einer Luftfeuchte unter 80% zur Defektbildung führen.

Bei dem hierin beschriebenen Schutzschichtsystem wird dadurch, dass die erste Schicht und die zweite Schicht eine unterschiedliche Beständigkeit gegenüber zwei verschiedenen Verunreinigungssubstanzen aufweisen, vorteilhaft eine höhere Beständigkeit gegenüber solchen Verunreinigungssubstanzen erzielt, als durch eine Einzelschicht aus dem ersten Material oder dem zweiten Material erzielt werden könnte.

Das Schutzschichtsystem enthält mehrere dielektrische Schichten und besteht vorzugsweise ausschließlich aus dielektrischen Schichten. Es ist vorteilhaft, wenn die dielektrischen Schichten des Schutzschichtsystems sehr dünne Schichten sind. Die Dicke der dielektrischen Schichten des Schutzschichtsystems beträgt nicht mehr als 30 nm, besonders bevorzugt nicht mehr als 20 nm. Es hat sich insbesondere herausgestellt, dass bei der Verwendung von dickeren dielektrischen Schichten aufgrund der dadurch bedingten größeren Schichtspannungen größere Defekte durch Verunreinigungspartikel entstehen können. In Schichten mit einer Dicke von nicht mehr als 30 nm oder bevorzugt von nicht mehr als 20 nm, sind die Schichtspannungen im Vergleich zu wesentlich dickeren Schichten vorteilhaft gering. Bei der Verwendung von vergleichsweise dünnen Schichten können bei einer vorgegebenen Gesamtschichtdicke des Schutzschichtsystems, die sich zum Beispiel aus optischen Anforderungen wie der Transmission oder der Absorption ergibt, vorteilhaft mehr Schichten in dem Schutzschichtsystem als bei dickeren Schichten gestapelt werden. Dies hat den Vorteil, dass das Schutzschichtsystem mehr Grenzflächen aufweist, die eine Barriere für das Ausbreiten von Partikeln oder Defekten ausbilden können. Die Anzahl der dielektrischen Schichten des Schutzschichtsystems beträgt mindestens fünf oder sogar mindestens zehn. Es ist weiterhin vorteilhaft, wenn die Dicke der dielektrischen Schichten mindestens 1 nm, vorzugsweise mindestens 2 nm beträgt. Die dielektrischen Schichten des Schutzschichtsystems können zum Beispiel zwischen 1 nm und 30 nm, bevorzugt zwischen 2 nm und 20 nm, dick sein.

Geeignete Materialien für das Schutzschichtsystem sind insbesondere Oxidschichten, Nitridschichten oder Fluoridschichten. Insbesondere können die dielektrischen Schichten des Schutzschichtsystems zumindest eines der folgenden Materialien enthalten oder daraus bestehen: SiO2, Si3N4, Al2O3, AlN, ZrO2, ZrN, HfO2, HfN, TiO2, TiN, Ta2O5, TaN, Nb2O5, NbN, Y2O3, YN, MgF2, MgO, LiF, A1F3.

Es hat sich herausgestellt, dass sich bei der Anlagerung von Verunreinigungen auf einem optischen Element durch eine hygroskopische Wirkung der Verunreinigungen Wassermoleküle an die Verunreinigungen gebunden werden können, wodurch ein kleiner Tropfen auf dem Schutzschichtsystem entsteht. In diesem Tropfen können Bestandteile wie Ionen aus den Verunreinigungspartikeln gelöst sein, so dass ein Elektrolyt entsteht, der ohne einen geeigneten Schutz zu der reflektierenden Metallschicht gelangen und diese schädigen könnte. Die auf diese Weise entstehenden Verunreinigungssubstanzen können insbesondere Chlor, Schwefel und/oder Verbindungen von Chlor oder Schwefel umfassen. Eine schädigende Wirkung auf reflektierende Metallschichten, insbesondere Silber, können insbesondere Salze wie NaCl oder Na2S aufweisen. Es ist daher vorteilhaft, wenn die erste Schicht und/oder die zweite Schicht eine hohe Beständigkeit gegenüber den Verunreinigungssubstanzen Chlor, Schwefel und/oder Verbindungen von Chlor oder Schwefel aufweisen.

Gemäß einer vorteilhaften Ausgestaltung weist die erste Schicht eine größere Beständigkeit gegenüber Chlor und/oder Chlorverbindungen als die zweite Schicht auf. Weiterhin ist es vorteilhaft, wenn die zweite Schicht eine größere Beständigkeit gegenüber Schwefel und/oder Schwefelverbindungen als die erste Schicht aufweist. Die Begriffe "erste Schicht" und "zweite Schicht" beziehen sich nicht auf Reihenfolge der Schichten in der reflektierenden Beschichtung, sondern dienen lediglich zur Unterscheidung der Schichten, die unterschiedliche Beständigkeiten gegenüber den verschiedenen Verunreinigungssubstanzen aufweisen. In der reflektierenden Beschichtung kann daher die erste Schicht über der zweiten Schicht oder alternativ die zweite Schicht über der ersten Schicht angeordnet sein. Weiterhin können die erste Schicht und die zweite Schicht in Vielschichtsystemen angeordnet sein, die jeweils mehrere erste Schichten und/oder zweite Schichten aufweisen. Das Schutzschichtsystem weist vorzugsweise mindestens drei Schichten aus mindestens zwei verschiedenen dielektrischen Materialien, die sich durch eine unterschiedliche Beständigkeit gegenüber den mindestens zwei verschiedenen Verunreinigungssubstanzen auszeichnen, auf.

Gemäß einer vorteilhaften Ausgestaltung weist die erste Schicht ein Aluminiumoxid, insbesondere Al2O3, auf. Es hat sich insbesondere herausgestellt, dass eine Aluminiumoxidschicht eine gute Beständigkeit gegenüber Chlor und/oder einer Chlorverbindung, insbesondere NaCl, aufweist. Eine Aluminiumoxidschicht zeichnet sich weiterhin durch eine hohe Transparenz in einem großen spektralen Bereich, der vom UV-Bereich bis in den IR-Bereich reicht, aus.

Die zweite Schicht weist vorzugsweise ein Siliziumoxid wie beispielsweise SiO2 auf. Es hat sich herausgestellt, dass eine Siliziumoxidschicht insbesondere eine gute Beständigkeit gegenüber Schwefel und/oder Schwefelverbindungen wie zum Beispiel Na2S aufweist.

Besonders vorteilhaft ist es daher, wenn das Schutzschichtsystem mindestens eine erste Schicht aus einem Aluminiumoxid und mindestens eine zweite Schicht aus einem Siliziumoxid aufweist. Auf diese Weise kann insbesondere erreicht werden, dass das Schutzschichtsystem eine gute Beständigkeit gegenüber Chlor und/oder Chlorverbindungen und gleichzeitig eine gute Beständigkeit gegenüber Schwefel und/oder Schwefelverbindungen aufweist.

Eine besonders gute Beständigkeit gegenüber den mindestens zwei Verunreinigungssubstanzen kann dadurch erzielt werden, dass das Schichtsystem mindestens zwei Schichtpaare aus jeweils der ersten Schicht und der zweiten Schicht enthält. Besonders bevorzugt enthält das Schutzschichtsystem sogar mindestens drei, mindestens vier oder sogar mindestens fünf Schichtpaare aus jeweils der ersten Schicht und der zweiten Schicht. Durch die abwechselnde Anordnung von mehreren ersten Schichten und zweiten Schichten in dem Schutzschichtsystem wird das Vordringen von Verunreinigungssubstanzen bis zu der reflektierenden Metallschicht besonders effektiv unterbunden.

Bei einer Ausgestaltung der reflektierenden Beschichtung ist zwischen der Metallschicht und dem Schutzschichtsystem eine weitere Haftschicht angeordnet. Die weitere Haftschicht weist vorteilhaft ein Material auf, das eine gute Adhäsion des Schutzschichtsystems auf der reflektierenden Metallschicht gewährleistet. Die weitere Haftschicht kann insbesondere ein Metall wie Cr, Ti, Cu, Ru, Mo, W, ein Halbleitermaterial wie Si oder SiC, ein dielektrisches Material wie SiO2, Si3N4, Al2O3, AlN, ZrO2, ZrN, HfO2, HfN, Ta2O5, TaN, Nb2O5, NbN, Y2O3, YN, oder Mischungen dieser Materialien aufweisen. Die Dicke der weiteren Haftschicht beträgt vorteilhaft zwischen 0,1 nm und 40 nm, bevorzugt zwischen 0,5 nm und 20 nm. Ähnlich wie die zwischen dem Substrat und der Metallschicht angeordnete Haftschicht kann auch die weitere Haftschicht zusätzlich zu ihrer Funktion als Haftschicht die Funktion einer Diffusionsbarriere aufweisen. Im Fall der weiteren Haftschicht vermindert die Haftschicht die Diffusion zwischen der reflektierenden Metallschicht und dem Schutzschichtsystem.

Bei einer vorteilhaften Ausgestaltung hat das Schutzschichtsystem zusätzlich zu seiner Funktion als Schutzschicht für die reflektierende Metallschicht eine optische Funktion. Das Schutzschichtsystem kann insbesondere ein reflexionserhöhendes Interferenzschichtsystem sein, bei dem die dielektrischen Schichten abwechselnd einen niedrigeren und einen höheren Brechungsindex aufweisen. Insbesondere kann das Schutzschichtsystem eine Folge von mehreren dielektrischen Schichten enthalten, die abwechselnd einen niedrigen Brechungsindex, insbesondere einen Brechungsindex n1 ≤ 1,6, und einen hohen Brechungsindex, insbesondere einen Brechungsindex n2 > 1,6, aufweisen. Durch ein solches reflexionserhöhendes Interferenzschichtsystem kann insbesondere durch eine geeignete Wahl der Schichtdicken, die mit an sich bekannten Simulationsprogrammen bestimmt werden können, die Reflexion der reflektierenden Beschichtung in einem vorgegebenen Spektralbereich erhöht werden.

Bei einer weiteren vorteilhaften Ausgestaltung weist das Schutzschichtsystem mindestens einen ersten Schichtstapel mit abwechselnden ersten Schichten und zweiten Schichten und mindestens einen zweiten Schichtstapel mit abwechselnden ersten Schichten und zweiten Schichten auf, wobei die Schichtstapel einen voneinander verschiedenen effektiven Brechungsindex aufweisen. Unter dem effektiven Brechungsindex wird bei dieser Ausgestaltung der über den jeweiligen Schichtstapel gemittelte Brechungsindex verstanden. Der effektive Brechungsindex des Schichtstapels ist eine Näherung für den Brechungsindex des Schichtstapels, wenn die Dicke der ersten Schichten und zweiten Schichten klein im Vergleich zur verwendeten Wellenlänge ist. Bei dieser Ausgestaltung hat jeder der Schichtstapel näherungsweise die Funktion einer optischen Schicht, deren Dicke der Dicke des Schichtstapels und deren Brechungsindex dem effektiven Brechungsindex des Schichtstapels entspricht.

Die Materialien der ersten Schichten in dem ersten Schichtstapel und der ersten Schichten in dem zweiten Schichtstapel können sich voneinander unterscheiden. Ebenso ist es möglich, dass sich die Materialien der zweiten Schichten in dem ersten Schichtstapel und der zweiten Schichten in dem zweiten Schichtstapel voneinander unterscheiden. Alternativ ist es aber auch möglich, dass für die ersten Schichten und/oder zweiten Schichten in dem ersten und dem zweiten Schichtstapel die gleichen Materialien verwendet werden. Bei dieser Ausgestaltung unterscheiden sich die ersten und/oder zweiten Schichten in den Schichtstapeln nicht in dem Material, weisen aber in den Schichtstapeln verschiedene Dicken auf.

Bei einer weiteren vorteilhaften Ausgestaltung des optischen Elements weisen in dem Schutzschichtsystem die mindestens eine erste Schicht und die mindestens eine zweite Schicht Schichtspannungen mit einem entgegengesetzten Vorzeichen auf. Bei dieser Ausgestaltung werden das Material der ersten Schicht und der zweiten Schicht vorteilhaft derart ausgewählt, dass die Schichten Schichtspannungen mit entgegengesetzten Vorzeichen erzeugen, so dass die Schichtspannungen vermindert werden oder sich sogar gegenseitig kompensieren. Beispielsweise kann das Schutzschichtsystem erste und zweite dielektrische Schichten aufweisen, wobei die ersten Schichten Zugspannungen und die zweiten Schichten Druckspannungen erzeugen, oder umgekehrt. Das Schutzschichtsystem kann also zusätzlich zu seiner Funktion als Schutz vor Verunreinigungssubstanzen und gegebenenfalls seiner optischen Funktion noch eine dritte Funktion zur Verminderung von Spannungen in der reflektierenden Beschichtung aufweisen.

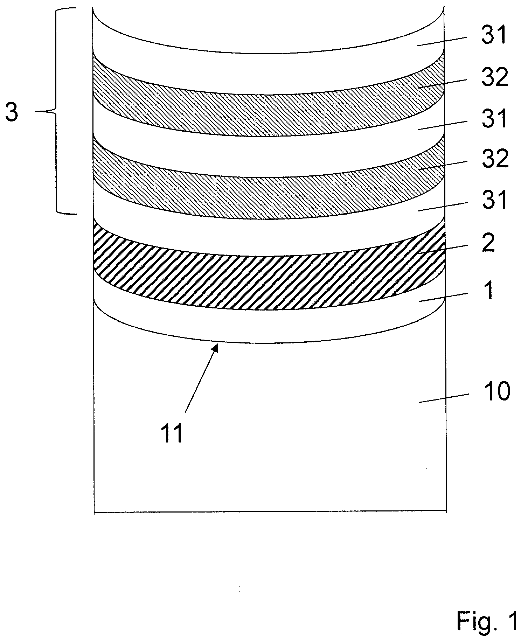

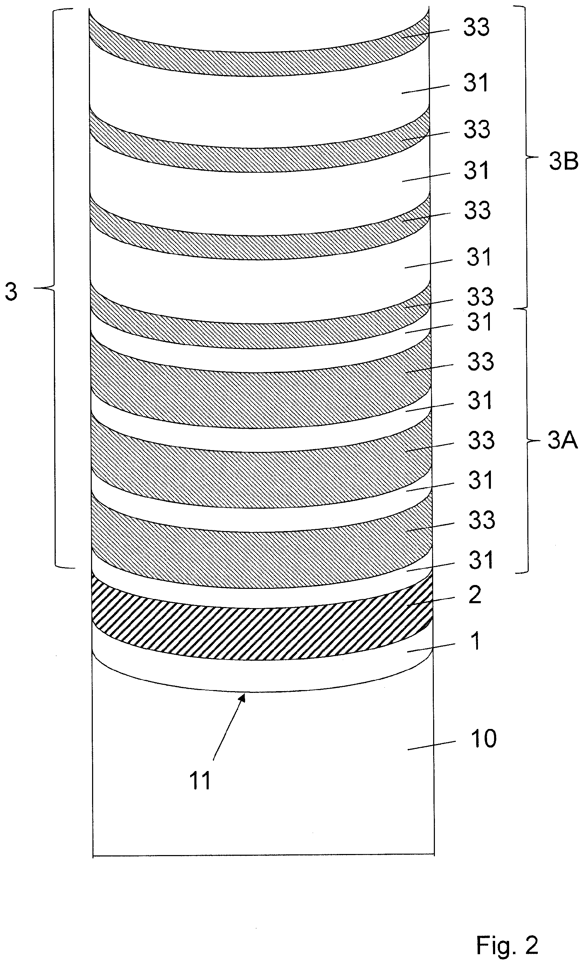

Die Erfindung wird im Folgenden anhand von zwei Ausführungsbeispielen im Zusammenhang mit den Figuren 1 und 2 näher erläutert.

Es zeigen:
Figur 1 eine schematische Darstellung eines Querschnitts durch ein optisches Element gemäß einem ersten Ausführungsbeispiel, und
Figur 2 eine schematische Darstellung eines Querschnitts durch ein optisches Element gemäß einem zweiten Ausführungsbeispiel.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

Das in Figur 1 schematisch im Querschnitt dargestellte optische Element gemäß dem ersten Ausführungsbeispiel weist ein Substrat 10 auf, das zum Beispiel ein Glassubstrat oder ein poliertes Metallsubstrat ist. Das Substrat 10 weist vorzugsweise eine rms-Rauheit von nicht mehr als 2 nm auf. Das optische Element kann insbesondere ein gekrümmtes optisches Element sein, bei dem zum Beispiel das Substrat 10 eine gekrümmte Oberfläche 11 aufweist. Das optische Element kann insbesondere für Anwendungen in der Astronomie vorgesehen sein. Besonders geeignet ist das hierin beschriebene optische Element aufgrund seiner hohen Langzeitstabilität für Anwendungen im Weltraum.

Bei dem Ausführungsbeispiel ist auf die gekrümmte Oberfläche 11 des Substrats 10 ein Schichtsystem aufgebracht, welches als Spiegelschicht für den Einsatz im visuellen Spektralbereich dient. Als erste Schicht ist auf das Substrat 10 eine Haftschicht 1 aufgebracht, die die zum Beispiel Al2O3 aufweist. Die Haftschicht 1 sowie die weiteren nachfolgenden Schichten des Schichtsystems sind bei dem Ausführungsbeispiel mittels Magnetronsputtern aufgebracht worden. Alternativ kann zum Aufbringen der Schichten ein PVD-Verfahren wie zum Beispiel thermische Verdampfung, Elektronenstrahlverdampfung, plasmagestützte Bedampfung oder Ionenstrahlsputtern, ein CVD-Verfahren oder ein ALD-Verfahren eingesetzt werden.

Auf die Haftschicht 1 ist bei dem Ausführungsbeispiel eine reflektierende Metallschicht 2 aufgebracht, bei der es sich um eine Silberschicht handelt. Bei der Herstellung der Silberschicht werden die Abscheideparameter vorzugsweise derart gewählt, dass eine möglichst glatte Silberschicht entsteht, um Reflexionsverluste durch Streuung zu vermeiden. Beim Abscheiden der Silberschicht mittels Magnetronsputtern hat es sich zum Beispiel als günstig herausgestellt, Argon als Sputtergas zu verwenden, wobei beispielsweise ein Gasfluss von 15 sccm, eine Sputterleistung von 500 Watt und ein Target-Substrat-Abstand von mehr als 100 mm eingestellt werden.

Zum Schutz der Silberschicht vor Umgebungseinflüssen ist auf die Silberschicht 2 ein Schutzschichtsystem 3 aufgebracht worden, das mehrere dielektrische Schichten 31, 32 enthält. Bei dem Ausführungsbeispiel ist das Schutzschichtsystem 3 aus abwechselnden Al2O3-Schichten 31 und SiO2-Schichten 32 aufgebaut. Insbesondere enthält das Schutzschichtsystem 3 ausgehend von der Silberschicht 2 zwei Schichtpaare aus jeweils einer Al2O3-Schicht 31 und einer SiO2-Schicht 32 sowie eine zusätzliche Al2O3-Schicht 31 als letzte Schicht.

Das Aufbringen der Al2O3-Schichten 31 kann beispielsweise mit einem reaktiven Sputterprozess erfolgen, wobei ein metallisches Aluminium-Target verwendet wird. Als Sputtergas kann Argon mit einem Gasfluss von beispielsweise 35 sccm verwendet werden, wobei zusätzlich so viel Sauerstoff als Reaktivgas dazugegeben wird, das eine stöchiometrische Al2O3-Schicht 31 abgeschieden wird. Die Al2O3-Schicht 31 weist vorteilhaft im Spektralbereich von 450 nm bis 5000 nm keine wesentlichen Absorptionsverluste auf. Während des Sputterprozesses erfolgt vorteilhaft eine Kontrolle des Sauerstoffpartialdrucks mittels einer Lambda-Sonde.

Das Aufbringen der SiO2-Schichten 32 erfolgt beispielsweise ebenfalls mit einem reaktiven Sputterprozess, wobei ein reines Silizium-Target verwendet wird. Als Sputtergas kann Argon mit einem Gasfluss von beispielsweise 35 sccm verwendet werden, wobei zusätzlich so viel Sauerstoff als Reaktivgas dazugegeben wird, dass eine stöchiometrische SiO2-Schicht abgeschieden wird. Vorteilhaft weist die SiO2-Schicht 32 im visuellen Spektralbereich keine wesentlichen Absorptionsverluste auf. Wie bei der Herstellung der Al2O3-Schicht 31 erfolgt vorteilhaft eine Kontrolle des Sauerstoffpartialdrucks mittels einer Lambda-Sonde.

Bei einer Ausgestaltung des Schutzschichtsystems 3 können die Al2O3-Schichten 31 und die SiO2-Schichten 32 eine Dicke von jeweils 10 nm aufweisen. In diesem Fall beträgt die Gesamtdicke des Schutzschichtsystems 3 nur etwa 50 nm. Die vergleichsweise dünnen abwechselnden ersten Schichten 31 und zweiten Schichten 32 bilden trotz ihrer geringen Dicken eine effektive Barriere gegen Verunreinigungen aus. Dies wird insbesondere dadurch erreicht, dass die gegen verschiedenen Verunreinigungen beständigen dünnen dielektrischen Schichten 31, 32 abwechselnd angeordnet sind und somit jeweils mehrere Barrieren für verschiedene Verunreinigungen ausbilden. Weiterhin werden durch die geringen Dicken der ersten Schichten 31 und zweiten Schichten 32 Schichtspannungen vermindert, welche ansonsten die Ausbreitung von Defekten fördern würden.

Es wäre alternativ zu dem hier beschriebenen Ausführungsbeispiel auch möglich, größere Schichtdicken von etwa 120 nm zu verwenden, um beispielsweise durch optische Interferenzeffekte eine Erhöhung der Reflexion in einem bestimmten Spektralbereich zu erzielen. Es ist beispielsweise möglich, mit dem auf diese Weise hergestellten Schichtsystem im gesamten Spektralbereich von 450 nm bis 5000 nm Reflexionswerte von mehr als 95 % zu erreichen.

Die reflektierende Beschichtung zeichnet sich insbesondere durch eine gute Langzeitstabilität aus. Bei der wie hier beschrieben hergestellten reflektierenden Beschichtung sind nach einem mehrtägigen Klimatest bei einer Temperatur von 49 °C und einer relativen Luftfeuchte von 95 % keine Schichtdefekte aufgetreten und die optischen Eigenschaften der reflektierenden Beschichtung haben sich nicht verändert.

Weiterhin ist die Beständigkeit der reflektierenden Beschichtung gegenüber Substanzen, die bei terrestrischen Umgebungsbedingungen auftreten können, geprüft worden. Es wurde bei einer Kontamination der reflektierenden Beschichtung mit NaCl und Na2S weder in den Bereichen mit einer Kontamination durch NaCl noch in den Bereichen mit einer Kontamination durch Na2S eine Schädigung der reflektierenden Silberschicht 2 festgestellt.

Im Gegensatz dazu zeigte ein Vergleichstest an einer Silberschicht mit einer einzelnen SiO2-Schutzschicht nach einer Kontamination mit NaCl und Na2S in den Bereichen eine Schädigung des Silbers, in denen eine Kontamination mit NaCl vorliegt. Weiterhin wurde bei einem Vergleichstest an einer Silberschicht mit einer einzelnen Al2O3-Schutzschicht festgestellt, dass nach einer Kontamination mit NaCl und Na2S in den Bereichen eine Schädigung des Silbers vorliegt, in denen eine Kontamination mit Na2S vorliegt.

Durch das hier beschriebene Schutzschichtsystem 3, das eine Folge von abwechselnden Al2O3-Schichten 31 und SiO2-Schichten 32 aufweist, wird gleichzeitig ein Schutz der Silberschicht 2 vor schwefelhaltigen Verunreinigungen und chlorhaltigen Verunreinigungen erzielt. Es ist insbesondere vorteilhaft, dass das Schichtsystem mindestens zwei Schichtpaare der gegen die verschiedenen Verunreinigungen beständigen dielektrischen Schichten 31, 32 aufweist, da auf diese Weise erreicht wird, dass für jede der Verunreinigungen eine mehrfache Barriere gegen das Vordringen bis zur Silberschicht 2 ausgebildet ist.

Weiterhin ist es vorteilhaft, dass die sich abwechselnden dielektrischen Schichten 31, 32 abwechselnd einen hohen Brechungsindex und einen niedrigen Brechungsindex aufweisen. So beträgt der Brechungsindex der Al2O3-Schichten 31 im sichtbaren Spektralbereich etwa 1,7. Der Brechungsindex der SiO2-Schichten 32 beträgt im sichtbaren Spektralbereich etwa 1,46. Das Schutzschichtsystem 3 kann daher zusätzlich zu seiner Schutzfunktion ein optisches Interferenzschichtsystem ausbilden, um beispielsweise die Reflexion der reflektierenden Beschichtung in einem bestimmten Spektralbereich zu erhöhen. Zur Erzielung eines Reflexionsmaximums bei einer vorgegebenen Wellenlänge können geeignete Schichtdicken für die dielektrischen Schichten 31, 32 durch Simulationsrechnungen bestimmt werden.

Das in Figur 2 dargestellte zweite Ausführungsbeispiel eines optischen Elements weist wie das erste Ausführungsbeispiel ein Substrat 10 mit einer gekrümmten Oberfläche 11, eine darauf aufgebrachte Haftschicht 1 aus Al2O3 und eine nachfolgende reflektierende Metallschicht 2 aus Silber auf. Die Eigenschaften und die Herstellungsweise dieser Schichten entsprechen dem ersten Ausführungsbeispiel.

Das zweite Ausführungsbeispiel unterscheidet sich von dem ersten Ausführungsbeispiel in der Ausgestaltung des Schutzschichtsystems 3. Wie in Figur 2 dargestellt, weist das Schutzschichtsystem 3 eine Abfolge von abwechselnden Schichten 31, 33 auf, bei denen es sich um Al2O3-Schichten 31 und Si3N4-Schichten 33 handelt. Das Schutzschichtsystem 3 enthält einen ersten Schichtstapel 3A, der durch drei Schichtpaare aus jeweils einer Al2O3-Schicht 31 und einer Si3N4-Schicht 33 sowie einer abschließenden Al2O3-Schicht 31 gebildet ist. In dem ersten Schichtstapel 3A weisen die Al2O3-Schichten 31 jeweils eine Dicke von 5 nm und die Si3N4-Schichten 33 jeweils eine Dicke von 20 nm auf.

Weiterhin enthält das Schutzschichtsystem 3 einen zweiten Schichtstapel 3B, der drei Schichtpaare aus jeweils einer Si3N4-Schicht 33 und einer Al2O3-Schicht 31 sowie eine abschließende Si3N4-Schicht 33 aufweist. In dem zweiten Schichtstapel 3B sind die Si3N4-Schichten 33 jeweils 5 nm dick und die Al2O3-Schichten 31 jeweils 20 nm dick.

Das Schutzschichtsystem 3 enthält insgesamt 14 abwechselnde dielektrische Schichten 31, 33, wobei wie bei dem vorherigen Ausführungsbeispiel aufgrund der Vielzahl der Schichtpaare eine Vielzahl von Barrieren gegen verschiedene Verunreinigungen ausgebildet wird.

Weiterhin wird durch die unterschiedlichen Schichtdicken der Einzelschichten 31, 33 in den Schichtstapeln 3A, 3B eine zusätzliche optische Funktion erzielt. Da die Schichtdicken der Einzelschichten 31, 33 in beiden Schichtstapeln 3A, 3B jeweils nicht mehr als 20 nm betragen, sind sie klein im Vergleich zu Wellenlängen von sichtbarem Licht. Beide Schichtstapel 3A, 3B können daher näherungsweise durch einen effektiven Brechungsindex beschrieben werden, der durch einen über den jeweiligen Schichtstapel 3A, 3B gemittelten Brechungsindex der Einzelschichten gegeben ist. Dieser gemittelte Brechungsindex ist in dem ersten Schichtstapel 3A, in dem die Si3N4-Schichten 33 eine größere Dicke als die Al2O3-Schichten 31 aufweisen, kleiner als in dem zweiten Schichtstapel 3B, in dem die Si3N4-Schichten 33 eine kleinere Dicke als die Al2O3-Schichten 31 aufweisen. Da die A1203-Schichten 31 einen größeren Brechungsindex als die Si3N4-Schichten aufweisen, ist der effektive Brechungsindex des zweiten Schichtstapels 3B größer als der effektive Brechungsindex des ersten Schichtstapels 3A.

Das Schutzschichtsystem 3 bildet somit ein optisches Interferenzschichtsystem aus, das durch den ersten Schichtstapel 3A mit einem geringeren effektiven Brechungsindex und einen zweiten Schichtstapel 3B mit einem höheren effektiven Brechungsindex gebildet ist. Die Vielzahl der Schichten 31, 33 und die verschiedenen Schichtdicken in den Schichtstapeln 3A, 3B ermöglichen somit eine weiter verbesserte Einstellung der optischen Eigenschaften des gesamten Schutzschichtsystems 3 im Vergleich zu einem Schutzschichtsystem mit weniger Einzelschichten.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Optisches Element mit einer reflektierenden Beschichtung, wobei die reflektierende Beschichtung mindestens umfasst:
- eine Haftschicht (1),
- eine der Haftschicht (1) nachfolgende zumindest teilweise reflektierende Metallschicht (2), und
- ein der Metallschicht (2) nachfolgendes Schutzschichtsystem (3), das mehrere dielektrische Schichten (31, 32) enthält,
wobei
- die dielektrischen Schichten (31, 32) mindestens eine erste Schicht (31) und mindestens eine zweite Schicht (32) umfassen, und wobei die erste Schicht (31) und die zweite Schicht (32) eine unterschiedliche Beständigkeit gegenüber mindestens zwei verschiedenen Verunreinigungssubstanzen aufweisen,
- die dielektrischen Schichten (31, 32) des Schutzschichtsystems (3) eine Dicke von nicht mehr als 30 nm aufweisen,
- die Anzahl der dielektrischen Schichten (31, 32) mindestens fünf beträgt,
**dadurch gekennzeichnet, dass**
- die Metallschicht (2) im Wesentlichen Silber aufweist.

2. Optisches Element nach Anspruch 1,
wobei die dielektrischen Schichten (31, 32) des Schutzschichtsystems (3) jeweils zumindest eines der folgenden Materialien enthalten oder daraus bestehen: SiO2, Si3N4, Al2O3, AlN, ZrO2, ZrN, HfO2, HfN, TiO2, TiN, Ta2O5, TaN, Nb2O5, NbN, Y2O3, YN, MgF2, MgO, LiF, A1F3.

3. Optisches Element nach einem der vorhergehenden Ansprüche,
wobei die Verunreinigungssubstanzen Chlor, Schwefel und/oder Verbindungen von Chlor oder Schwefel umfassen.

4. Optisches Element nach einem der vorhergehenden Ansprüche,
wobei die erste Schicht (31) eine größere Beständigkeit gegenüber Chlor und/oder Chlorverbindungen als die zweite Schicht (32) aufweist.

5. Optisches Element nach einem der vorhergehenden Ansprüche,
wobei die erste Schicht (31) eine Aluminiumoxidschicht ist.

6. Optisches Element nach einem der vorhergehenden Ansprüche,
wobei die zweite Schicht (32) eine größere Beständigkeit gegenüber Schwefel und/oder Schwefelverbindungen als die erste Schicht (31) aufweist.

7. Optisches Element nach einem der vorhergehenden Ansprüche,
wobei die zweite Schicht (32) eine Siliziumoxidschicht ist.

8. Optisches Element nach einem der vorhergehenden Ansprüche,
wobei das Schutzschichtsystem (3) mindestens zwei Schichtpaare aus jeweils der ersten Schicht (31) und der zweiten Schicht (32) enthält.

9. Optisches Element nach einem der vorhergehenden Ansprüche,
wobei das Schutzschichtsystem (3) mindestens drei Schichtpaare aus jeweils der ersten Schicht (31) und der zweiten Schicht (32) enthält.

10. Optisches Element nach einem der vorhergehenden Ansprüche,
wobei das Schutzschichtsystem (3) ein reflexionserhöhendes Interferenzschichtsystem ist, das abwechselnd Schichten (31) mit einem höheren Brechungsindex und Schichten (32) mit einem niedrigeren Brechungsindex aufweist.

11. Optisches Element nach einem der vorhergehenden Ansprüche,
wobei das Schutzschichtsystem (3) mindestens einen ersten Schichtstapel (3A) mit abwechselnden ersten Schichten (31) und zweiten Schichten (33) und mindestens einen zweiten Schichtstapel mit abwechselnden ersten Schichten (31) und zweiten Schichten (33) aufweist, wobei die Schichtstapel (3A, 3B) einen voneinander verschiedenen effektiven Brechungsindex aufweisen.

12. Optisches Element nach einem der vorhergehenden Ansprüche,
wobei in dem Schutzschichtsystem (3) die mindestens eine erste Schicht (31) und die mindestens eine zweite Schicht (32) Schichtspannungen mit einem entgegengesetzten Vorzeichen aufweisen.

13. Optisches Element nach einem der vorhergehenden Ansprüche,
wobei die reflektierende Beschichtung auf eine gekrümmte Oberfläche (11) eines Substrats (10) aufgebracht ist.

## Claims

1. An optical element having a reflective coating, the reflective coating comprising at least
- an adhesive layer (1),
- an at least partially reflective metal layer (2) subsequent to the adhesive (1) layer, and
- a protective layer system (3) comprising a plurality of dielectric layers (31, 32) subsequent to the metal layer (2),
wherein
- the dielectric layers (31, 32) comprise at least one first layer (31) and at least one second layer (32), and wherein the first layer (31) and the second layer (32) have a different resistance to at least two different contaminating substances,
- the dielectric layers (31, 32) of the protective layer system (3) hane a thickness of no greater than 30 nm,
- the number of dielectric layers (31, 32) is at least five,
**characterized in that**
- the metal layer (2) substantially comprises silver.

2. The optical element according to claim 1,
wherein the dielectric layers (31, 32) of the protective layer system (3) each comprise or are made of at least one of the following materials: SiO2, Si3N4, A1203, A1N, ZrO2, ZrN, HfO2, HfN, TiO2, TiN, Ta2O5, TaN, Nb2O5, NbN, Y2O3, YN, MgF2, MgO, LiF, AlF3.

3. The optical element according to any one of the preceding claims,
wherein the contaminating substances comprise chlorine, sulfur, and/or compounds of chlorine or sulfur.

4. The optical element according to any one of the preceding claims,
wherein the first layer (31) has greater resistance to chlorine and/or chlorine compounds than the second layer (32) .

5. The optical element according to any one of the preceding claims,
wherein the first layer (31) is an aluminum oxide layer.

6. The optical element according to any one of the preceding claims,
wherein the second layer (32) has greater resistance to sulfur and/or sulfur compounds than the first layer (31) .

7. The optical element according to any one of the preceding claims,
wherein the second layer (32) is a silicon oxide layer.

8. The optical element according to any one of the preceding claims,
wherein the protective layer system (3) comprises at least two pairs of layers each comprising the first layer (31) and the second layer (32).

9. The optical element according to any one of the preceding claims,
wherein the protective layer system (3) comprises at least three pairs of layers each comprising the first layer (31) and the second layer (32).

10. The optical element according to any one of the preceding claims,
wherein the protective layer system (3) is a reflection-increasing interference layer system comprising alternating layers (31) having a higher refractive index and layers (32) having a lower refractive index.

11. The optical element according to any one of the preceding claims,
wherein the protective layer system (3) comprises at least one stack of layers (3A) having alternating first layers (31) and second layers (33) and at least one second stack of layers having alternating first layers (31) and second layers (33), wherein the stack ofs layers (3A, 3B) have different effective refractive indexes from each other.

12. The optical element according to any one of the preceding claims,
wherein the at least one first layer (31) and the at least one second layer (32) in the protective layer system (3) comprise layer strains having opposite signs.

13. The optical element according to any one of the preceding claims,
wherein the reflective coating is applied to a curved surface (11) of a substrate (10).

## Revendications

1. Élément optique avec un revêtement réfléchissant, dans lequel le revêtement réfléchissant comprend au moins :
- une couche adhésive (1),
- une couche métallique (2) au moins partiellement réfléchissante suivant la couche adhésive (1), et
- un système de couche de protection (3) suivant la couche métallique (2), qui contient plusieurs couches diélectriques (31, 32),
dans lequel
- les couches diélectriques (31, 32) comprennent au moins une première couche (31) et au moins une seconde couche (32), et dans lequel la première couche (31) et la seconde couche (32) présente une résistance différente à au moins deux substances contaminantes différentes,
- les couches diélectriques (31, 32) du système de couche de protection (3) présentent une épaisseur qui ne dépasse pas 30 nm,
- le nombre de couches diélectriques (31, 32) est de cinq au moins,
**caractérisé en ce que**
- la couche métallique (2) contient essentiellement de l'argent.

2. Élément optique selon la revendication 1,
dans lequel les couches diélectriques (31, 32) du système de couche de protection (3) contiennent respectivement ou sont composées d'au moins l'un des matériaux suivants : SiO2, Si3N4, Al2O3, AlN, ZrO2, ZrN, HfO2, HfN, TiO2, TiN, Ta2O5, TaN, Nb2O5, NbN, Y2O3, YN, MgF2, MgO, LiF, AlF3.

3. Élément optique selon l'une des revendications
précédentes,
dans lequel les substances contaminantes comprennent du chlore, du soufre et/ou des composés de chlore ou de soufre.

4. Élément optique selon l'une des revendications
précédentes,
dans lequel la première couche (31) présente une plus grande résistance au chlore et/ou aux composés chlorés que la seconde couche (32).

5. Élément optique selon l'une des revendications
précédentes,
dans lequel la première couche (31) est une couche d'oxyde d'aluminium.

6. Élément optique selon l'une des revendications
précédentes,
dans lequel la seconde couche (32) présente une plus grande résistance au soufre et/ou aux composés sulfurés que la première couche (31).

7. Élément optique selon l'une des revendications
précédentes,
dans lequel la seconde couche (32) est une couche d'oxyde de silicium.

8. Élément optique selon l'une des revendications
précédentes,
dans lequel le système de couche de protection (3) comprend au moins deux paires de couches composées respectivement de la première couche (31) et de la seconde couche (32).

9. Élément optique selon l'une des revendications
précédentes,
dans lequel le système de couche de protection (3) comprend au moins trois paires de couches composées respectivement de la première couche (31) et de la seconde couche (32).

10. Élément optique selon l'une des revendications
précédentes,
dans lequel le système de couche de protection (3) est un système de couche d'interférence augmentant la réflexion, qui comprend alternativement des couches (31) ayant un indice de réfraction plus élevé et des couches (32) ayant un indice de réfraction plus faible.

11. Élément optique selon l'une des revendications
précédentes,
dans lequel le système de couche de protection (3) présente au moins une première pile de couches (3A) comprenant en alternance des premières couches (31) et des secondes couches (33) et au moins une seconde pile de couches comprenant en alternance des premières couches (31) et des secondes couches (33), sachant que les piles de couches (3A, 3B) présentent un indice de réfraction efficace différent l'un de l'autre.

12. Élément optique selon l'une des revendications
précédentes,
dans lequel, dans le système de couche de protection (3), la au moins une première couche (31) et la au moins une seconde couche (32) présentent des contraintes de couche avec un signe opposé.

13. Élément optique selon l'une des revendications
précédentes, dans lequel le revêtement réfléchissant est appliqué sur une surface courbe (11) d'un substrat (10).
